# EUROPÄISCHE PATENTSCHRIFT

(11) **EP 1 596 221 B1**
(45) Veröffentlichungstag und Bekanntmachung des Hinweises auf die Patenterteilung: **18.02.2015**
(21) Anmeldenummer: 04030615.1
(22) Anmeldetag: 23.12.2004
(51) Int. Cl.: G01S 17/93, G01S 7/487, G01S 17/10

(54) **Verfahren und Vorrichtung zur Entfernungsmessung**
Method and apparatus for measuring distance
Procédé et dispositif pour mesurer des distances

(30) Priorität: 10.05.2004 DE 102004022912
(43) Veröffentlichungstag der Anmeldung: 16.11.2005
(73) Patentinhaber: SICK AG, 79183 Waldkirch (DE)
(72) Erfinder: Kiehn, Michael, 21039 Hamburg (DE); Gosch, Kirsten, 20535 Hamburg (DE); Köhler, Michael, 22769 Hamburg (DE); Willhoeft, Volker, 22303 Hamburg (DE)
(74) Vertreter: Manitz, Finsterwald & Partner GbR

(56) Entgegenhaltungen:
- DE-C1- 4 237 347
- GB-A- 1 271 245
- US-A- 5 302 956
- US-A1- 2004 070 745
- US-B1- 6 369 624
- US-B1- 6 493 653

## Beschreibung

Die Erfindung betrifft ein Verfahren zur Entfernungsmessung durch Bestimmen der Pulslaufzeit gemäß dem Oberbegriff des Anspruchs 1.

Die Erfindung betrifft außerdem eine Vorrichtung zur Entfernungsmessung durch Bestimmen der Pulslaufzeit gemäß Anspruch 17.

Derartige Verfahren und Vorrichtungen sind grundsätzlich bekannt, insbesondere aus dem Gebiet der Lasermessgeräte, die nach dem auch als "Time of Flight-Prinzip" bezeichneten Pulslaufzeit-Messverfahren arbeiten. Bei derartigen Lasermessgeräten wird von dem Empfänger die Intensität der nachgewiesenen reflektierten Strahlung kontinuierlich in eine elektrische Spannung umgewandelt. Der zeitliche Verlauf dieser Empfangsspannung stellt ein auch als Rückstreukurve bezeichnetes analoges Empfangssignal dar.

Mit einer Schwellenschaltung, die insbesondere einen oder mehrere Komparatoren umfasst, wird ermittelt, wann die Rückstreukurve oberhalb des jeweiligen Schwellenwertes liegt und wann darunter. Im ersteren Fall kann das Ergebnis als logisch "1" und im letzteren Fall als logisch "0" gewertet werden. Wenn das analoge Empfangssignal aufgrund eines Signalpulses, der einem Objekt entspricht, an welchem ein ausgesandter Strahlungspuls reflektiert wurde, vorübergehend oberhalb der Schwelle liegt, erzeugt die Schwellenschaltung also einen logischen Puls. Mehrere solche analogen Signalpulse resultieren folglich in einer entsprechenden Anzahl von logischen Pulsen. Als Bezugszeitpunkt für die beispielsweise auf den ansteigenden Flanken der logischen Signalpulse basierenden Laufzeitmessung dient in der Praxis meist ein den Startzeitpunkt der Messung definierender Startpuls. Hierbei wird z.B. die ansteigende Flanke des logischen Signalpulses, also der Zeitpunkt, an welchem das analoge Empfangssignal die Schwelle durchbrochen hat, als "Ereignis" bezeichnet. Über die Lichtgeschwindigkeit kann dann aus der Zeitdifferenz zwischen den ansteigenden Flanken des (logischen) Startpulses und des (logischen) Signalpulses die Entfernung zu dem Objekt, von dem der (analoge) Signalpuls stammt, berechnet werden. Meist werden auch die abfallenden Flanken der logischen Signalpulse als Ereignisse vermessen, um Informationen über die Pulsbreiten zu erhalten. Der Zeitmessung kommt folglich eine entscheidende Bedeutung zu.

Sowohl an die Messempfindlichkeit, die Messgenauigkeit als auch die Messgeschwindigkeit werden in der Praxis immer höhere Anforderungen gestellt. Gleichzeitig sollen die Messsysteme kostengünstig herstellbar sein, um z.B. als zusätzliche Komponenten in für die unterschiedlichsten Anwendungen dienenden seriengefertigten Einheiten die Gesamtkosten in vertretbaren Grenzen zu halten.

Gerade bei Lasermesssystemen wird mit einem enormen Aufwand versucht, eine möglichst hohe Messgenauigkeit oder Messauflösung zu erzielen, da aufgrund der Lichtgeschwindigkeit sehr kurze Zeitintervalle gemessen werden müssen. Ein Entfernungsunterschied von 1 cm beispielsweise entspricht einer Laufzeitdifferenz von etwa 66 ps. Um solche Anforderungen an die Zeitmessung erfüllen zu können, wurden bislang spezielle ASIC-Bausteine entwickelt, was die resultierenden Messsysteme aufgrund der hohen Entwicklungskosten vergleichsweise teuer macht.

Zum Stand der Technik wird außerdem auf US 2004/0070745 A1, US 6,492,653 B1, US 6,369,624 B1 sowie GB 1 271 245 verwiesen.

Es ist eine Aufgabe der Erfindung, bei der Entfernungsmessung durch Bestimmen der Pulslaufzeit eine Möglichkeit zu schaffen, mit möglichst geringem Kostenaufwand eine möglichst hohe Messgenauigkeit zu realisieren, wobei insbesondere auch die Möglichkeit geschaffen werden soll, mit einer Messung mehrere Ereignisse vermessen zu können.

Die Lösung dieser Aufgabe erfolgt erfindungsgemäß zum einen durch die Merkmale des unabhängigen Verfahrensanspruchs 1 und zum anderen durch die Merkmale des Vorrichtungsanspruchs 17.

Erfindungsgemäß wird eine frei programmierbare Logikschaltung dazu verwendet, das z.B. von einer Schwellenschaltung zugeführte logische Empfangssignal zeitgerastert in den auch als Logikzellen bezeichneten logischen Einheiten der Logikschaltung abzubilden. Frei programmierbare Logikschaltungen sind insbesondere in Form von FPGAs (Field Programmable Gate Arrays) als Standardbausteine zu vergleichsweise geringen Kosten erhältlich. Erfindungsgemäß umfasst die Logikschaltung wenigstens ein FPGA.

Es hat sich erfindungsgemäß herausgestellt, dass die Flexibilität und die hohe Geschwindigkeit derartiger Bausteine in vorteilhafter Weise für eine Zeitmessung mit hoher Auflösung genutzt werden können, wenn es möglich ist, die insbesondere mittels einer Schwellenschaltung erzeugten logischen Empfangssignale der programmierbaren Logikschaltung in einer eindeutig und genau definierten Weise zuzuführen. Dies wird erfindungsgemäß mittels einer getakteten Dateneinleseeinrichtung erzielt, wie sie beispielsweise an modernen FPGAs in Form von für hohe Datenerfassungsgeschwindigkeiten ausgelegten Schnittstellen zur Verfügung steht. Diese FPGA-Schnittstellen können erfindungsgemäß unter Umgehung aller übrigen Schnittstellenkomponenten wie z.B. Protokollfunktionen als reine schnelle Seriell/Parallel-Wandler genutzt werden, um die logischen Empfangssignale zeitlich zu rastern, d.h. zu "samplen".

Es ist wider Erwarten festgestellt worden, dass insbesondere mit so genannten MGTs (Multi-Gigabit Transceivers) versehene FPGAs bei hohe Anforderungen an die Genauigkeit stellenden Zeitmessungen ausgezeichnet für "Sampling"-Funktionen an logischen Empfangssignalen geeignet sind. Moderne FPGAs stellen Takt- bzw. Sampling-Raten von beispielsweise 3,125 GHz zur Verfügung. Auf der Grundlage einer solchen Taktrate kann eine Auflösung in der Entfernungsmessung von etwa 5 cm erzielt werden. Da sich FPGAs mit einer Sampling-Rate von bis zu 10 GHz bereits in Vorbereitung befinden, lässt sich die mit der Erfindung erzielbare Messgenauigkeit zukünftig also noch erheblich steigern.

Durch die erfindungsgemäße Abbildung des logischen Empfangssignals auf das Zeitraster der Logikschaltung spiegeln die den Zeitfenstern des Zeitrasters zugeordneten Logikeinheiten den logischen Zustand des logischen Empfangssignals in den betreffenden Zeitintervallen wieder. Damit ist in den Logikeinheiten jeweils die Information festgehalten, ob zu dem betreffenden Zeitpunkt das analoge Empfangssignal oberhalb oder unterhalb der jeweiligen Schwelle lag. Somit kann unter Berücksichtigung der Lichtgeschwindigkeit die Entfernung berechnet werden, in welcher der ausgesandter Strahlungspuls so reflektiert wurde, dass die Intensität des reflektierten Signalpulses oberhalb der Schwelle liegt. Dabei ist die Genauigkeit dieser Entfernungsmessung von der Feinheit des Zeitrasters abhängig.

Eine einfache Möglichkeit zur Erhöhung der Feinheit oder Auflösung des Zeitrasters und damit der Genauigkeit der Zeit- und somit Entfernungsmessung besteht in der Verwendung hoher Taktraten. Wie vorstehend erwähnt, können zu diesem Zweck beispielsweise FPGAs mit MGTs verwendet werden, die bereits einen sehr hohen Grundtakt zur Abtastung der logischen Empfangssignale bereitstellen.

Erfindungsgemäß hat sich außerdem herausgestellt, dass gerade programmierbare Logikschaltungen wie FPGAs die vorteilhafte Möglichkeit bieten, durch bestimmte schaltungs- und programmiertechnische Maßnahmen - auf die nachstehend näher eingegangen wird - auch mit einem relativ niedrigen Grundtakt sehr hohe Auflösungen zu erzielen, so dass eine Verwendung von MGTs unterbleiben kann, wodurch eine weitere erhebliche Kostenreduzierung erzielbar ist.

Die erwähnten Maßnahmen bestehen insbesondere darin, Phasenverschiebungen entweder eines gegebenen Grundtaktes, wodurch effektiv eine Abtastung mit mehreren, zeitlich verschobenen Takten realisiert wird, oder des logischen Empfangssignals vorzunehmen, wobei auch eine Kombination beider Maßnahmen möglich ist. Beide Maßnahmen führen letztlich zu einer effektiven Erhöhung der Abtastrate und können auch in Verbindung mit MGTs durchgeführt werden, wodurch enorm hohe Auflösungen erzielbar werden.

Erfindungsgemäß ist vorgesehen, dass mehrere Takte durch Phasenverschiebung eines Grundtaktes erzeugt werden, und dass das logische Empfangssignal phasenverschoben wird.

Bei einer Phasenverschiebung des Grundtaktes wird das gleiche logische Empfangssignal mehrmals zeitverschoben abgetastet. Die Anzahl der das Empfangssignal abbildenden Logikeinheiten entspricht dabei der Anzahl der Zeitintervalle oder Zeitfenster des höheren effektiven Taktes; die Zeitfenster werden kürzer, d.h. das Zeitraster wird feiner.

Durch eine Phasenverschiebung des logischen Empfangssignals ändert sich der Takt und damit die Anzahl der Zeitfenster zwar nicht. Dennoch wird letztlich ebenfalls das gleiche logische Empfangssignal mehrmals abgetastet, so dass für jedes Zeitfenster mehrere Momentanwerte des logischen Empfangssignals - nämlich an zeitlich unterschiedlichen Stellen - ermittelt und in den Logikeinheiten festgehalten werden. Für jedes Zeitfenster werden also mehrere Logikeinheiten genutzt, d.h. das Zeitraster wird ebenfalls feiner.

Die vorstehend erwähnten Maßnahmen erfolgen erfindungsgemäß extern bezüglich der programmierbaren Logikschaltung. Grundsätzlich kommen alle schaltungs- und/oder programmiertechnisch möglichen Maßnahmen zur Erzeugung von Phasenverschiebungen des Grundtaktes und/oder der logischen Empfangssignale in Frage.

Ein besonderer Vorteil der Erfindung besteht darin, dass in einer einzigen Messung, d.h. für einen einzigen ausgesandten Strahlungspuls, prinzipiell eine beliebig große, letztlich nur durch die Auflösung des Zeitrasters begrenzte Anzahl von Ereignissen vermessen werden kann. Erfolgt eine Reflexion des ausgesandten Strahlungspulses an mehreren Objekten - wodurch das analoge Empfangssignal eine entsprechende Anzahl von Signalpulsen und folglich das logische Empfangssignal eine entsprechende Anzahl von logischen Pulsen enthält - so enthält das von den Logikeinheiten der Logikschaltung gebildete Zeitraster automatisch die Information über die Entfernungen aller Objekte. Erfindungsgemäß können somit für einen einzigen ausgesandten Strahlungspuls und damit praktisch gleichzeitig mehrere Ereignisse vermessen werden.

Hierdurch besitzt das erfindungsgemäße Messverfahren bzw. Messsystem gewissermaßen eine "eingebaute" Rauschtoleranz, denn ein eine Schwelle zwar übersteigender, nicht jedoch einem interessierenden Objekt entsprechender Rauschpuls würde zwar nachgewiesen werden, nicht jedoch die Messeinrichtung für alle später einlaufenden Signalpulse blockieren. Vielmehr würden gelegentliche Rauschpulse zunächst wie "normale" Ereignisse mit gemessen werden. Eine sich an die Logikschaltung anschließende Auswerteeinheit kann so ausgelegt werden, dass Rauschpulse bei der späteren Auswertung dann als solche erkennbar sind und eliminiert werden können.

Bei einer Anwendung der Erfindung z.B. in Laserscannern, die beispielsweise in Kraftfahrzeugen eingesetzt werden, würde ein Rauschpuls durch Algorithmen zur Erkennung und Verfolgung von Objekten während der Auswertung z.B. bereits dadurch eliminiert werden, dass in der Nachbarschaft eines von dem Rauschpuls zunächst vorgetäuschten "Objektes" keine weiteren Reflexionen nachweisen lassen, die für tatsächlich vorhandene Objekte in der Umgebung des mit dem Laserscanner ausgestatteten Fahrzeugs erwartet werden.

Des Weiteren ermöglicht es die erfindungsgemäße Rauschtoleranz in vorteilhafter Weise, die Schwelle einer Schwellenschaltung näher an das Rauschen zu legen als dies bei Messsystemen möglich ist, die bereits nach einem oder einer geringen Anzahl von die Schwelle übersteigenden Signalen für nachfolgende Signale in der gleichen Messung, d.h. zu dem gleichen ausgesandten Strahlungspuls, "blind" sind.

Indem erfindungsgemäß die Schwelle gegenüber bekannten Messsystemen abgesenkt werden kann, ohne die Auswertung der Entfernungsdaten zu beeinträchtigen, kann mit dem erfindungsgemäßen Verfahren bzw. System eine beträchtliche Empfindlichkeitssteigerung erzielt werden.

Bevorzugte Ausführungsformen der Erfindung sind auch in den abhängigen Ansprüchen, der Beschreibung sowie der Zeichnung angegeben.

Vorzugsweise werden die Momentanwerte des logischen Empfangssignals in den Logikeinheiten der Logikschaltung festgehalten, bis das logische Empfangssignal vollständig eingelesen ist. Das zeitgerasterte logische Empfangssignal kann dann als Ganzes weiter verarbeitet und insbesondere einer nachgeordneten Auswerteeinheit als das Ergebnis der Messung zugeführt werden.

In einem besonders bevorzugten Ausführungsbeispiel der Erfindung werden aus dem analogen Empfangssignal mehrere logische Empfangssignale erzeugt, indem das analoge Empfangssignal gleichzeitig oder nacheinander über mehrere Schwellen einer Schwellenschaltung geführt wird.

Durch die Anwendung mehrerer Schwellen auf das analoge Empfangssignal kann ein an die jeweilige Applikation optimal angepasster zeitlicher Verlauf der effektiv in die Auswertung der Messung eingehenden Schwelle festgelegt werden.

Vorzugsweise wird das analoge Empfangssignal gleichzeitig über die mehreren Schwellen geführt, so dass aus einem analogen Empfangssignal mehrere unterschiedliche logische Empfangssignale erzeugt werden, die der programmierbaren Logikschaltung parallel zugeführt werden. Jedes dieser logischen Empfangssignale kann dann als ein Messergebnis auf ein Zeitraster der Logikschaltung abgebildet werden, wodurch für eine Messung praktisch mehrere verschiedene Messergebnisse vorliegen, die sich hinsichtlich der auf das analoge Empfangssignal angewendeten Schwelle unterscheiden, was für bestimmte Anwendungen eine interessante Datenbasis für die Auswertung darstellen kann.

Erfindungsgemäß ist es alternativ aber auch möglich, aus mehreren der Logikschaltung zugeführten logischen Empfangssignalen ein einziges Messergebnis abzuleiten. Insbesondere kann hierbei während der Messung zwischen den parallel einlaufenden einzelnen logischen Empfangssignalen umgeschaltet werden, so dass das als Ergebnis vorliegende zeitlich gerasterte logische Empfangssignal tatsächlich aus mehreren Abschnitten unterschiedlicher logischer Empfangssignale zugesammengesetzt ist, die sich hinsichtlich einer sie erzeugenden Schwelle voneinander unterscheiden.

Unterschiedliche Schwellen können bei der nachfolgenden Auswertung des Messergebnisses berücksichtigt werden, da die Zeitpunkte des Umschaltens zwischen den einzelnen logischen Empfangssignalen, d.h. die Zeitpunkte der Schwellenwechsel, bekannt sind und daher aufgrund dieser Zeitinformation jedem logischen Zustand in den Logikeinheiten der betreffende Schwellenwert zugeordnet werden kann.

In einer weiteren bevorzugten Ausgestaltung der Erfindung kann die oder eine der gleichzeitig verwendeten Schwellen in Form einer sogenannten adaptiven Schwelle vorgesehen sein, deren Höhe sich zeitlich in Abhängigkeit von dem analogen Empfangssignal ändert. Der zeitliche Verlauf der Schwelle ist somit nicht vorgegeben, sondern das jeweilige analoge Empfangssignal bestimmt selbst den Schwellenverlauf.

Eine bevorzugte Möglichkeit zur Erzeugung einer solchen adaptiven Schwelle besteht erfindungsgemäß darin, das analoge Empfangssignal zu filtern. Insbesondere wird die adaptive Schwelle durch Tiefpassfilterung des analogen Empfangssignals erzeugt.

Erfindungsgemäß ist zur Erzeugung des logischen oder digitalen Empfangssignals bevorzugt eine Schwellenschaltung mit wenigstens einem Komparator vorgesehen, der das analoge Empfangssignal zugeführt wird. Alternativ kann als Umwandlungseinrichtung ein Analog/Digital-Wandler vorgesehen sein, mit dem ebenfalls aus dem analogen Empfangssignal ein digitales oder logisches Empfangssignal erzeugt wird. Der Analog/Digital-Wandler kann separat oder als Bestandteil der Messeinrichtung vorgesehen sein. Insbesondere kann der Analog/Digital-Wandler der programmierbaren Logikschaltung, insbesondere einem FPGA, vorgeschaltet oder in die Logikschaltung bzw. den FPGA integriert sein. Im letzteren Fall wird praktisch eine analoge Schnittstelle bereitgestellt.

Die Erfindung wird im Folgenden beispielhaft unter Bezugnahme auf die Zeichnung beschrieben. Es zeigen:
- Fig. 1a: schematisch den prinzipiellen Aufbau einer erfindungsgemäßen Messvorrichtung,
- Fig. 1b: den Prinzipaufbau für ein erfindungsgemäßes Samplingverfahren,
- Fig. 2: eine schematische Darstellung zur Erläuterung der erfindungsgemäßen Verwendung mehrerer Schwellen,
- Fig. 3: schematisch das erfindungsgemäße Prinzip einer adaptiven Schwelle,
- Fig. 4: eine Darstellung zur Erläuterung eines erfindungsgemäßen Synchronisationsprinzips,
- Fig. 5a und 5b: Darstellungen zur Erläuterung eines erfindungsgemäßen Prinzips zur Reduzierung der Datenverarbeitungsgeschwindigkeit, und
- Fig. 6: ein Blockschaltbild zur Erläuterung des Reduzierungsprinzips am Beispiel eines 2-Bit-Zählers.

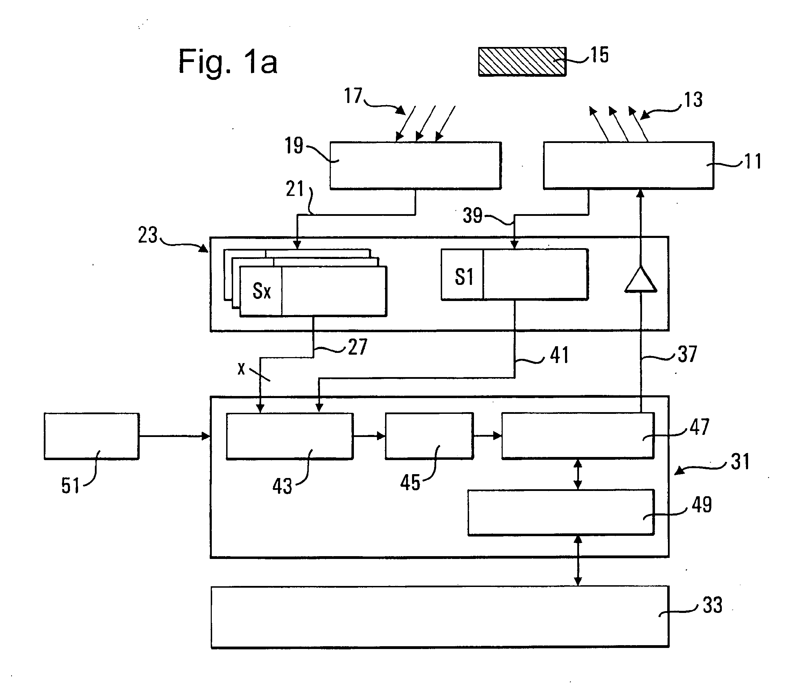

Fig. 1a zeigt ein erfindungsgemäßes Entfernungsmesssystem, das für einen Empfangskanal ausgelegt ist. Grundsätzlich ist auch eine Mehrkanalvariante möglich, in der die reflektierten Signalpulse gleichzeitig mittels einer Mehrzahl von Empfängern nachgewiesen und die analogen Empfangssignale parallel in der erfindungsgemäßen Weise verarbeitet werden.

Ein aufgrund eines Triggersignals 37 von einem beispielsweise eine Laserdiode umfassenden Sender 11 ausgesandter Strahlungspuls 13 wird nach Reflexion an einem oder mehreren Objekten 15 in Form von einem oder mehreren reflektierten Signalpulsen 17 durch einen beispielsweise eine Diode vom APD-Typ umfassenden Empfänger 19 nachgewiesen. Der Empfänger 19 erzeugt das auch als Rückstreukurve bezeichnete analoge Empfangssignal 21 in Form einer einen bestimmten zeitlichen Verlauf aufweisenden elektrischen Spannung, die den zeitlichen Verlauf der von dem Empfänger 19 "gesehenen" Intensität der einfallenden Strahlung 17 widerspiegelt.

Das analoge Empfangssignal 21 wird einer Schwellenschaltung 23 zugeführt, die in dem hier dargestellten Ausführungsbeispiel mehrere Komparatoren mit unterschiedlich hoch eingestellten Schwellwerten Sx umfasst. Jeder Komparator Sx erzeugt aus dem analogen Empfangssignal 21 ein jeweiliges logisches Empfangssignal 27 mit einer von dem analogen Empfangssignal 21 und der jeweiligen Schwelle Sx abhängigen Anzahl von logischen Signalpulsen.

Die logischen Empfangssignale 27 werden zusammen mit einem Startpulssignal 41 dem Messblock 43 eines der Schwellenschaltung 23 nachgeordneten FPGA 31 zugeführt. Zur Erzeugung des Startpulssignals 41 wird ein vom Sender 11 gleichzeitig mit dem ausgesandten Strahlungspuls 13 generierter Startpuls 39 über einen weiteren Komparator S 1 geführt.

Der logische Startpuls 41 dient im FPGA 31 als Bezugszeitpunkt für die nachstehend näher erläuterte Zeitmessung an den logischen Empfangssignalen 27.

In dem Messblock 43 des FPGA 31 werden die einlaufenden logischen Empfangssignale 27 mit Hilfe eines Taktgebers 51 in Bezug auf den durch den logischen Startpuls 41 definierten Startzeitpunkt einem Sampling-Prozess unterzogen und jeweils auf ein logisches Zeitraster abgebildet. Als Hochgeschwindigkeitsschnittstelle zum Einlesen der logischen Empfangssignale 27 dient ein in den FPGA 31 integrierter MGT, der hier als schneller Seriell/Parallel-Wandler genutzt und durch den Taktgeber 51 getaktet wird.

Wie eingangs bereits erwähnt, kann durch bestimmte Maßnahmen ausgehend von einem gegebenen Grundtakt - entweder eines MGT oder auch eines im Vergleich dazu wesentlich preisgünstigeren FPGA ohne MGT - die effektive Sampling-Rate und damit die Genauigkeit der Zeitmessung erhöht werden.

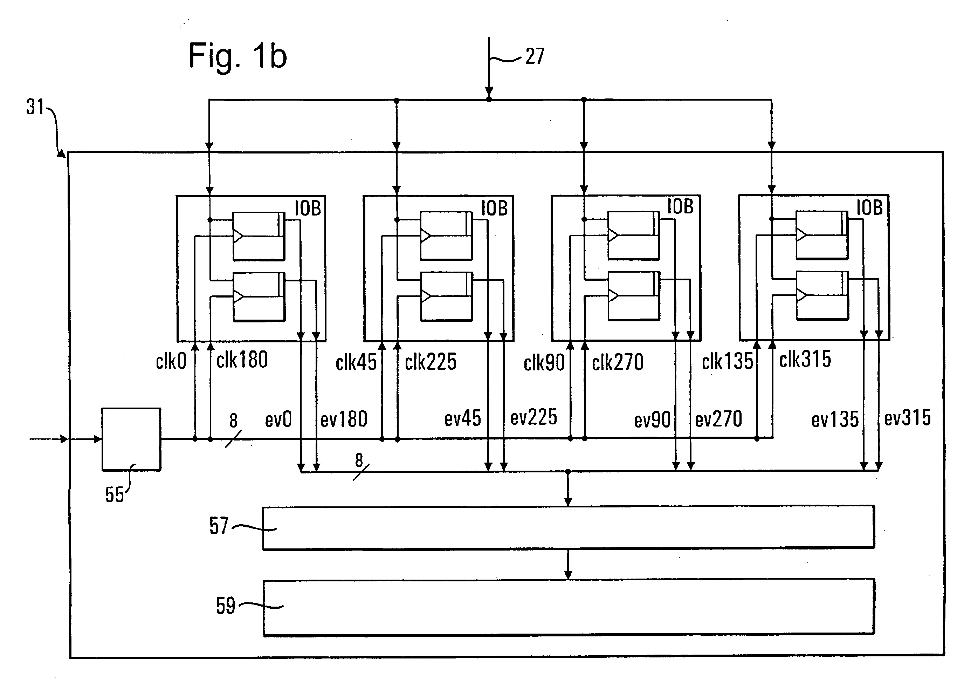

Eine Möglichkeit, einen Grundtakt von z.B. 320 MHz eines herkömmlichen FPGA 31 ohne MGT beispielsweise zu verachtfachen und damit eine effektive Sampling-Rate von 2,56 GHz zu erzielen, besteht erfindungsgemäß darin, in DDR-Technologie (DDR = Double Data Rate) ausgelegte IOBs (Input-Output-Blocks) des FPGA 31 durch programmiertechnische Maßnahmen so zu nutzen, dass der Grundtakt mehrfach phasenverschoben und so das logische Eingangssignal 27 mehrfach mittels phasenverschobener Takte abgetastet wird. Einen Prinzipaufbau hierzu zeigt Fig. 1b.

Der FPGA 31 umfasst zusätzlich zu den lOBs eine Takteinheit 55, eine Synchronisationseinheit 57 sowie eine Verarbeitungseinheit 59.

Eine alternative oder zusätzliche Maßnahme zur Erhöhung der Genauigkeit besteht darin, die logischen Empfangssignale 27 gezielt zu verzögern und das gleiche logische Empfangssignal 27 mehrfach phasenverschoben mit dem Grundtakt - oder mit einer durch Phasenverschiebung des Grundtaktes erzeugten höheren Taktrate - abzutasten. Eine solche Delay-Maßnahme kann beispielsweise einfach hardwaremäßig dadurch erzielt werden, dass das logische Empfangssignal 27 zusätzlich über eine oder mehrere Signalleitungen geführt wird, deren Längen und damit Delay-Zeiten gezielt vorgegeben werden.

Am Ende der Messung liegt in dem FPGA 31 für jeden Komparator Sx entsprechend dem Zeitraster eine zeitliche Folge von logischen Momentanwerten des logischen Empfangssignals 27 vor, wobei für jedes Zeitintervall oder Zeitfenster des Grundtaktes des Taktgebers 51 oder eines höheren effektiven Taktes, mit dem das logische Empfangssignal 27 abgetastet wurde, in den entsprechenden Logikeinheiten oder Logikzellen des FPGA 31 die jeweiligen Momentanwerte des logischen Empfangssignals 27 festgehalten sind.

Jedes logische Empfangssignal 27 wird in eine Folge von Nullen und Einsen umgewandelt, wobei eine Null oder Eins bedeutet, dass in dem betreffenden Zeitfenster das analoge Empfangssignal 21 unterhalb bzw. oberhalb der jeweiligen Schwelle Sx liegt. Die Breite der Zeitfenster, d.h. die Feinheit des Zeitrasters und damit die Auflösung der Zeitmessung, ist durch den effektiven Takt bestimmt, mit welchem das logischen Empfangssignal 27 abgetastet wird. Wie bereits eingangs erwähnt, sind erfindungsgemäß verwendbare FPGAs 31 in Form von Standardbausteinen mit Sampling-Raten von mehreren GHz erhältlich, womit Ortsauflösungen bei der Entfernungsmessung von wenigen Zentimetern erzielt werden können. Noch kostengünstigere FPGAs, die mit deutlich niedrigeren Grundtakten von z.B. unter 1 GHz betrieben werden, können erfindungsgemäß durch die vorstehend erwähnten Maßnahmen zur Erhöhung der effektiven Sampling-Rate verwendet werden, um ebenfalls hohe Messgenauigkeiten zu erzielen.

Die jeweils auf ein Zeitraster abgebildeten logischen Empfangssignale 27 werden nach erfolgter Messung im Messblock 43 über eine nach dem FIFO-Prinzip (First-In First-Out) arbeitenden Datenleitung 45 einem auch zur Erzeugung des Triggersignals 37 dienenden Steuerblock 47 und von dort einer Schnittstelle 49 des FPGA 31 zugeführt, von der die Messergebnisse einer nachgeordneten externen Auswerteeinheit 33 übergeben werden.

Eine erfindungsgemäß bevorzugte Möglichkeit, die Messgenauigkeit weiter zu erhöhen, besteht darin, das Startpulssignal 41 jeweils gemeinsam mit den logischen Empfangssignalen 27 zu vermessen. Hierzu werden das Startpulssignal 41 und das jeweilige logische Empfangssignal 27 vor der Abtastung zusammengeführt, so dass der analoge Startpuls 39 wie ein Signalpuls 17 behandelt, d.h. mit der gleichen hohen Auflösung vermessen wird. Anfang und Ende der jeweiligen Zeitmessung sind dadurch mit gleich hoher Genauigkeit bekannt.

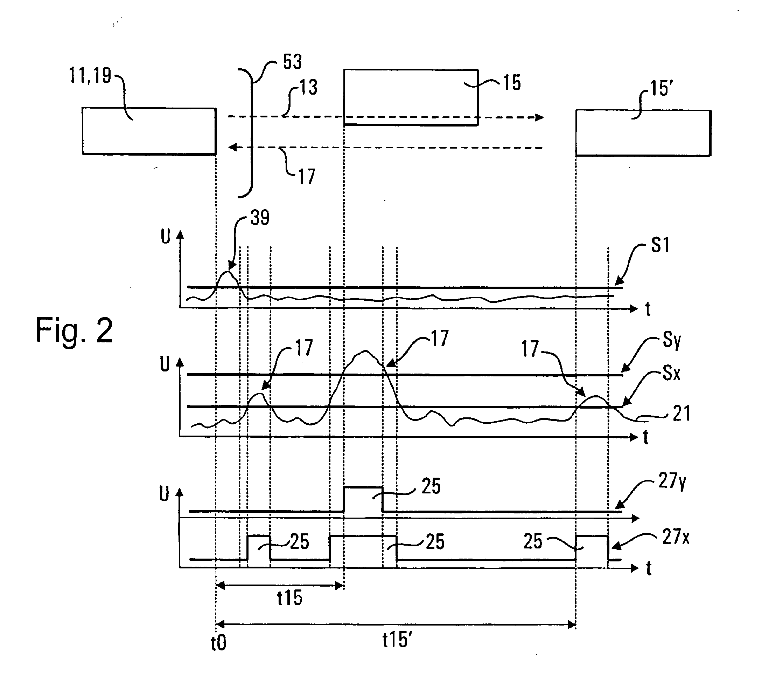

Fig. 2 zeigt beispielhaft eine Applikation, für welche die Verwendung einer Mehrzahl von unterschiedlichen Schwellen S sinnvoll ist. In dem dargestellten Beispiel werden zwei Messschwellen Sx, Sy verwendet.

Eine untere Schwelle Sx ist so niedrig eingestellt, dass von relativ weit entfernten Objekten 15' reflektierte Signalpulse 17, die eine relativ niedrige Intensität aufweisen, noch sicher nachgewiesen werden können.

Die höhere Schwelle Sy dient dazu, unerwünschte Reflexionen im Nahbereich des Sensors 11, 19 zu unterdrücken, wie sie beispielsweise von einer Abdeckung 53 des Sensors 11, 19 hervorgerufen werden. Reflektierte Signalpulse 17, die von relativ nahen Objekten 15 stammen, werden mittels der hohen Schwelle Sy ebenfalls nachgewiesen, da - bei gleichem Reflexionsvermögen - von Nahzielen 15 stammende Signalpulse 17 eine höhere Intensität besitzen als Signalpulse, die von Fernzielen 15' reflektiert werden.

In dem in Fig. 2 dargestellten Beispiel werden folglich mittels der beiden unterschiedlich eingestellten Schwellen Sx, Sy aus einem einzigen analogen Empfangssignal 21 zwei unterschiedliche logische Empfangssignale 27x, 27y erzeugt. Eine einzige Messung, d.h. eine einzige Rückstreukurve 21, liefert somit grundsätzlich zwei Messergebnisse.

Das mittels der niedrigen Schwelle Sx erzeugte logische Empfangssignal 27x umfasst drei logische Signalpulse 25, die den tatsächlich reflektierten Signalpulsen 17 entsprechen. Das mittels der hohen Schwelle Sy erzeugte logische Empfangssignal 27y dagegen weist lediglich einen logischen Puls entsprechend dem vom nahen Objekt 15 stammenden hohen Signalpuls 17 auf.

Erfindungsgemäß können mittels des FPGA 31 (Fig. 1a) beide logischen Empfangssignale 27x, 27y jeweils vollständig, d.h. über die der Reichweite des Sensors 11, 19 entsprechende Messzeit, einem Sampling-Prozess unterzogen und auf ein Zeitraster des FPGA 31 abgebildet werden.

Alternativ ist es möglich, aus den beiden logischen Empfangssignalen 27x, 27y lediglich ein einziges Messergebnis im FPGA 31 zu bilden, indem zunächst das mittels der hohen Schwelle Sy erzeugte logische Empfangssignal 27y abgetastet, nach einer bestimmten Zeitdauer während der Messung auf das mittels der niedrigen Schwelle Sx erzeugte logische Empfangssignal 27x umgeschaltet und für die verbleibende Messzeit dieses logische Empfangssignal 27x abgetastet wird.

Der Umschaltzeitpunkt kann beispielsweise nach dem Nachweis des vom Nahziel 15 stammenden Signalpulses 17 durch die niedrige Schwelle Sx liegen, so dass das im Zeitraster des FPGA 31 festgehaltene Messergebnis lediglich den einzigen die hohe Schwelle Sy übersteigenden Signalpuls 17 vom Nahziel 15 sowie den lediglich die niedrige Schwelle Sx übersteigenden Signalpuls 17 vom Fernziel 15' umfasst.

Der von der Sensorabdeckung 53 stammende Signalpuls 17 sowie der mittels der niedrigen Schwelle Sx erzeugte breite Signalpuls 17 vom Nahziel 15 werden somit zwar nachgewiesen, finden jedoch nicht Eingang in das eigentliche Messergebnis, d.h. in die im Zeitraster des FPGA 31 abgelegte Folge von logischen Momentanwerten, werden also effektiv ausgeblendet.

Die Entfernungen des nahen Objektes 15 einerseits und des entfernten Objektes 15' andererseits vom Sensor 11, 19 werden jeweils in Bezug auf die ansteigende Flanke des Startpulses 39 dadurch bestimmt, dass in dem logischen Empfangssignal 27, welches auf das Zeitraster im FPGA 31 abgebildet wurde, diejenigen Zeitpunkte ermittelt werden, in denen ein Wechsel des logischen Momentanwertes von "0" auf " 1" erfolgt ist, da ein solcher Wechsel eine ansteigende Flanke eines logischen Pulses 25 bedeutet.

Die seit dem Nachweis der ansteigenden Flanke des Startpulses 39, d.h. seit Beginn der Messung, vergangene Zeit, also die gesuchte Pulslaufzeit, kann einfach durch Abzählen der bis zum Auftreten der ansteigenden Flanken der logischen Signalpulse 25 "verstrichenen" Zeitfenster des durch den Taktgeber 51 (Fig. 1a) in zeitlicher Hinsicht exakt definierten Zeitrasters bestimmt werden. Dies erfolgt in der dem FPGA 31 nachgeordneten Auswerteeinheit 33 (Fig. 1a). In Bezug auf den einem Abstand von Null entsprechenden Startzeitpunkt t0 des Startpulses 39 können also die Pulslaufzeiten t15 für das Nahziel 15 und t15' für das Fernziel 15' mit einer der Feinheit des Zeitrasters entsprechenden Genauigkeit gemessen und über die Lichtgeschwindigkeit in die entsprechenden Abstandswerte umgerechnet werden.

Je feiner das Zeitraster, d.h. je höher der effektive Takt, gewählt ist, desto genauer kann erfindungsgemäß die Zeit- und damit die Entfernungsmessung durchgeführt werden, wobei aufgrund der Flexibilität und der Geschwindigkeit moderner FPGAs der erfindungsgemäßen Entfernungsmessung hinsichtlich der erzielbaren Genauigkeit und damit Ortsauflösung, praktisch keine Grenzen gesetzt sind. Eine hohe Messgenauigkeit und die Fähigkeit, mehrere Ereignisse vermessen und damit separate Objekte oder Objektstrukturen auflösen zu können, werden also erfindungsgemäß in äußerst vorteilhafter Weise miteinander kombiniert.

Das vorstehend erwähnte Umschalten zwischen den einzelnen logischen Empfangssignalen 27x kann beispielsweise dadurch erfolgen, dass unter Ausnutzung der Programmierbarkeit des FPGA 31 eine Multiplexer-Funktion implementiert wird, die durch entsprechende Programmierung grundsätzlich beliebig konfigurierbar ist. Auf der Basis der in einem konkreten Sensor jeweils physikalisch vorhandenen Schwellen S kann durch die programmierbare Multiplexer-Funktion ein beliebiger effektiver zeitlicher Schwellenverlauf im Sinne eines zeitlichen Hin- und Herspringens zwischen den einzelnen Schwellen S vorgegeben und auch geändert werden.

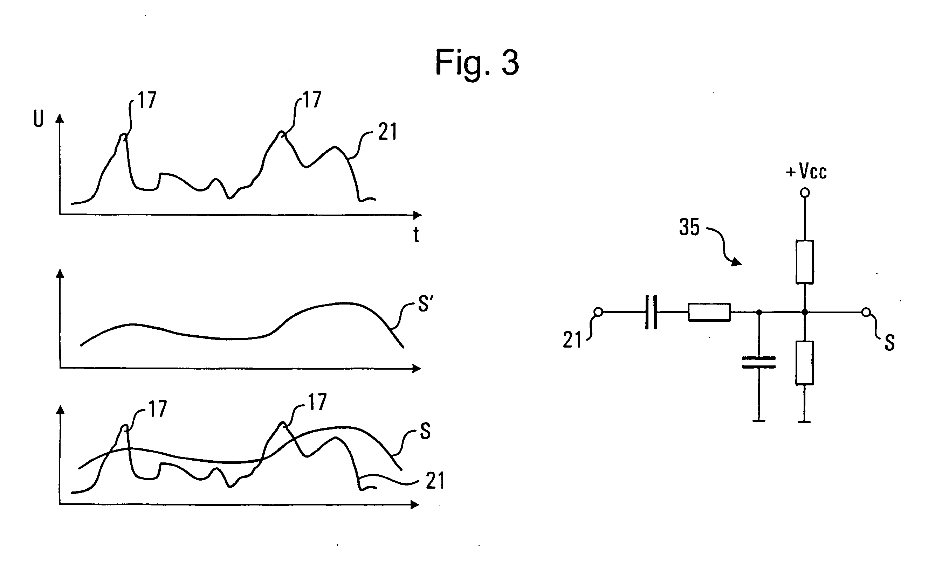

Fig. 3 zeigt schematisch das erfindungsgemäße Konzept einer adaptiven Schwelle. Dieses Konzept kann beispielsweise in Fahrzeuganwendungen zum Einsatz kommen, um auch bei Fahrten im Nebel z.B. vorausfahrende andere Fahrzeuge sicher erkennen zu können.

Oben links ist in Fig. 3 eine Rückstreukurve 21 dargestellt, wie sie beispielsweise bei Messungen im Nebel der Schwellenschaltung 33 von einem Empfänger 19 (Fig. 1a) zugeführt wird. Dieses analoge Empfangssignal 21 zeichnet sich durch einen hohen Untergrund aus, dem die von interessierenden Objekten stammenden Signalpulse 17 überlagert sind. Der Nebel wird von dem Sensor 11, 19 wie ein Objekt mit einer extrem hohen Unschärfe "gesehen", das allerdings - anders als Rauschen - keinen Untergrund von im zeitlichen Mittel ungefähr konstanter Höhe hervorruft und daher nicht einfach durch eine entsprechend hoch eingestellte zeitlich konstante Schwelle "ausgeblendet" werden könnte.

Um dennoch von interessierenden Objekten stammende Signalpulse 17 sicher identifizieren zu können, wird erfindungsgemäß das analoge Empfangssignal 21 über einen Tiefpassfilter 35 geführt, wie er beispielhaft rechts in Fig. 3 dargestellt ist, wodurch sich eine tiefpassgefilterte, geglättete Rückstreukurve S' ergibt. Dieses Prinzip kann auf unterschiedliche Art und Weise genutzt werden:

Da die tiefpassgefilterte Rückstreukurve S' dem analogen Empfangssignal 21 folgt, kann die tiefpassgefilterte Rückstreukurve S' noch während der Messung als Schwelle S für das analoge Empfangssignal 21 dienen, wobei die tiefpassgefilterte Rückstreukurve S' ggf. noch mit einem Offset versehen wird. Entsprechend der Darstellung unten links in Fig. 3 wird das analoge Empfangssignal 21 während der Messung mit seiner eigenen Glättung verglichen. Die im Vergleich zu dem z.B. von Nebel gebildeten Untergrund schnellen Signalpulse 17 ragen somit stets aus dem Filtersignal S heraus. Diese Vorgehensweise kann als auto-adaptives Schwellenkonzept bezeichnet werden, da sich die Schwelle S' bzw. S automatisch von selbst an die tatsächlichen momentanen Sichtverhältnisse anpasst.

Alternativ kann die geglättete Rückstreukurve S' über einen - im Vergleich zu einer einzigen Messung langen - Zeitraum gemittelt werden, was insbesondere dann möglich ist, wenn sich die von dem Auftreten interessierender Objekte unabhängigen Verhältnisse wesentlich langsamer verändern als die Objektszenarien. Die Art und Weise der Mittelung ist dabei zwar vorgegeben. Dennoch passt sich die resultierende Schwelle S' bzw. S an die tatsächlichen Verhältnisse an, so dass auch hier von dem Konzept einer adaptiven Schwelle gesprochen werden kann.

Das Konzept einer adaptiven Schwelle kann auch auf den eigentlichen, anhand der Auswertung der logischen Empfangssignale gewonnenen Messergebnissen basieren. Hierbei wird die jeweilige Schwelle - falls erforderlich - erst in Abhängigkeit von den tatsächlichen Messungen verändert.

Wenn in der jeweiligen Applikation mehr als eine Schwelle verwendet wird, dann können eine oder mehrere solcher auto-adaptiven oder adaptiven Schwellen grundsätzlich mit einer oder mehreren Schwellen von zeitlich konstanter Höhe kombiniert werden. Prinzipiell können erfindungsgemäß alle Schwellenkonzepte sowohl alleine als auch in Kombination zum Einsatz kommen.

Unabhängig davon, ob mit einer adaptiven Schwelle gearbeitet wird oder nicht, ist das erfindungsgemäße Konzept einer Mehrzahl unterschiedlich eingestellter Schwellen in Verbindung mit der erfindungsgemäßen Verwendung einer Messeinrichtung, die eine getaktete Dateneinleseeinrichtung und eine programmierbare Logikschaltung umfasst, von besonderem Vorteil, da ohne aufwändige Analogtechnik schnell und einfach in beliebiger Weise von den verschiedenen logischen Empfangssignalen der unterschiedlichen Schwellen Gebrauch gemacht werden kann.

Vorstehend wurden bereits einige Möglichkeiten zur Erhöhung der effektiven Sampling-Rate erwähnt. Im Folgenden werden damit im Zusammenhang stehende Weiterbildungen der Erfindung erläutert. Dabei handelt es sich um
- eine Möglichkeit zur Phasenverschiebung bzw. Verzögerung des logischen Empfangssignals 27 durch Nutzung einer speziellen Funktion, die an neueren FPGA-Bausteinen zur Verfügung steht ("Verzögerung des Empfangssignals"),
- eine programmiertechnisch realisierbare Möglichkeit zur Synchronisation einer Mehrzahl von mithilfe phasenverschobener Grundtakte erhaltenen Abtastwerten auf einen Grundtakt mit der Phasenverschiebung 0, wobei die zu synchronisierenden Abtastwerte durch Abtasten zumindest eines logischen Empfangssignals 27 mittels der Mehrzahl von Takten (Grundtakt + phasenverschobene Takte) erhalten werden ("Synchronisation"), und
- eine Möglichkeit, die Weiterverarbeitung von Daten innerhalb eines FPGA durch programmiertechnische Maßnahmen gegenüber dem Grundtakt zu verlangsamen ("Reduzierung der Verarbeitungsgeschwindigkeit") .
Diese Weiterbildungen stellen prinzipiell unabhängige Aspekte der Erfindung dar, können jedoch auch miteinander kombiniert werden.

### Verzögerung des Empfangssignals:

Vorstehend wurde bereits die Möglichkeit erwähnt, eine Phasenverschiebung des logischen Empfangssignals 27 durch Verzögerung hardwaremäßig dadurch zu erzielen, dass das Empfangssignal 27 über eine oder mehrere zusätzliche Signalleitungen geführt wird, deren Längen und damit Verzögerungszeiten bekannt sind. Derartige Verzögerungsleitungen lassen sich zwar gut kontrollieren. Voraussetzung ist jedoch, dass die verwendete Hardware einschließlich der programmierbaren Logikschaltung insbesondere hinsichtlich ihrer Geometrie und Anschlüsse die Implementierung derartiger Delay-Lines überhaupt zulässt.

Verzögerungsleitungen können prinzipiell auch durch die innere Struktur der programmierbaren Logikeinheit gebildet werden, beispielsweise aus den internen Gates oder der Carry-Chain eines FPGA. Diese internen Lösungen haben jedoch den Nachteil, dass die Laufzeiten der internen Komponenten temperaturabhängig sind und darüber hinaus von Baustein zu Baustein variieren. Eine stabile Implementierung des Verzögerungsprinzips ist daher äußerst schwierig wenn nicht angesichts der gewünschten Messgenauigkeit unmöglich.

Es hat sich überraschend herausgestellt, dass ein Merkmal neuerer FPGA-Bausteine optimal dafür geeignet ist, eine programmierbare Verzögerungsleitung zur Phasenverschiebung eines logischen Empfangssignals 27 bereitzustellen, die eine garantierte und während des Betriebs geregelte Länge aufweist. Bei diesem Merkmal handelt es sich eigentlich um eine Korrekturfunktion, die verwendet wird, um das Timing der Eingangssignale in Bezug auf den FPGA-Grundtakt zu korrigieren, insbesondere Zeitfehler ("skew") zwischen Daten- und Taktsignalen zu vermeiden. Eine solche Korrekturfunktion ist auch bei vielen der bislang erhältlichen FPGAs verfügbar, dort allerdings zum einen lediglich ein- und ausschaltbar sowie zum anderen hinsichtlich der Genauigkeit den vorstehend erwähnten Schwankungen unterworfen.

Bei der neuen Generation von FPGAs kann durch entsprechende Programmierung der Korrekturfunktion eine Verzögerungsleitung realisiert werden, die in eine Vielzahl von Verzögerungsabschnitten unterteilt werden kann. Bei dem Baustein "Virtex 4" der Firma Xilinx beispielsweise kann eine Verzögerungsleitung mit einer maximalen Länge von 5ns in 64 Abschnitte unterteilt werden, wodurch die Verzögerungen in Schritten von etwa 78ps variiert werden können.

### Synchronisation:

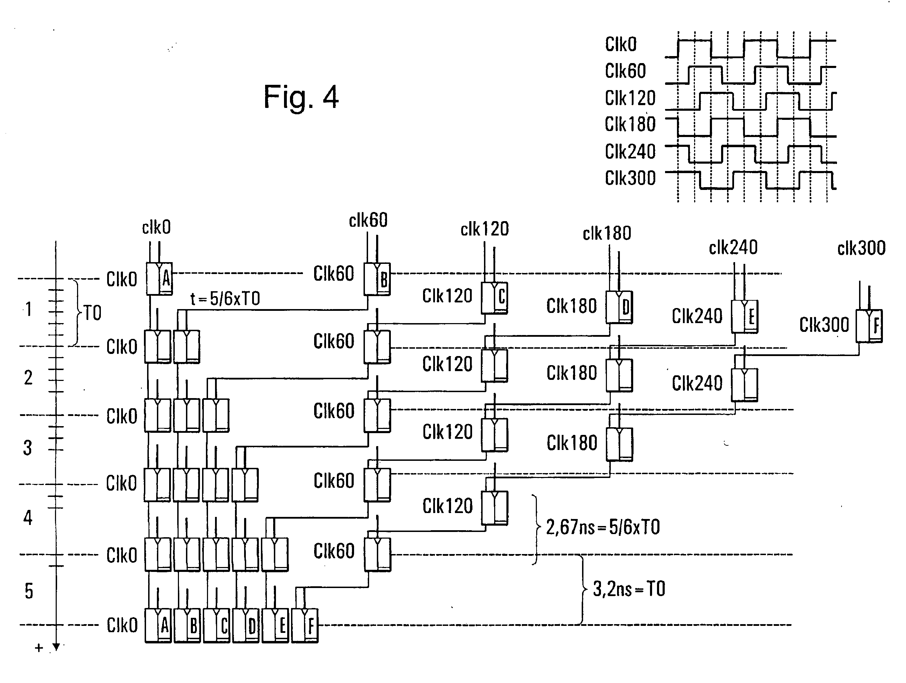

Gemäß Fig. 4 ist der FPGA-Grundtakt C1k0, der z.B. 312,5 MHz beträgt und somit eine Periode T0 von 3,2ns besitzt, fünffach um jeweils 60° bzw. etwa 0,53ns phasenverschoben. Bei der Abtastung eines logischen Empfangssignals 27 wird folglich alle 0,53ns ein Abtastwert (Momentanwert) erhalten und in einem FPGA-Register (Logikeinheit) festgehalten. Innerhalb einer Taktperiode von 3,2ns werden also sechs Abtastwerte erhalten, allerdings nicht gleichzeitig, sondern in einem zeitlichen Abstand von jeweils 0,53ns. Jeder dieser sechs Abtastwerte ist einem der Takte zugeordnet, nämlich dem Grundtakt Clk0 oder einem der phasenverschobenen Takte Clk60, C1k120, Clk180, C1k240 oder Clk300.

Für die Weiterverarbeitung der Messdaten (Abtastwerte) ist es wünschenswert, die innerhalb einer Periode (T0 von z.B. 3,2ns) zeitlich gestaffelt erhaltenen sechs Abtastwerte zeitlich zu synchronisieren, um sie gemeinsam als so genannten Bitvektor verarbeiten zu können. Es ist daher erforderlich, zeitlich gestaffelt erhaltene Abtastwerte auf einen bestimmten Takt, insbesondere den Grundtakt Clk0, zu synchronisieren.

Problematisch bei schnellen FPGAs, also bei FPGAs mit einem hohen Grundtakt, wie sie erfindungsgemäß bevorzugt zum Einsatz kommen, ist die kurze Zeitspanne, die für die zur Synchronisation erforderliche Übernahme der Abtastwerte aus den jeweiligen Registern in zur Bildung des gewünschten Bitvektors vorgesehene Register zur Verfügung steht. In dem vorstehenden Beispiel würde bei einer mit dem Grundtakt C1k0 erfolgenden Übernahme die zur Verfügung stehende Übernahmezeit für die Abtastwerte des Taktes C1k60 noch 5 x T0/6 = 2,66ns betragen, wohingegen die Übernahmezeit für den Takt C1k300 nur noch 1 x T0 / 6 = 0,53ns betragen würde. Je nach Ausgestaltung des FPGA stößt man an eine hardwarebedingte Grenze, die eine Synchronisation auf den Grundtakt unmöglich macht.

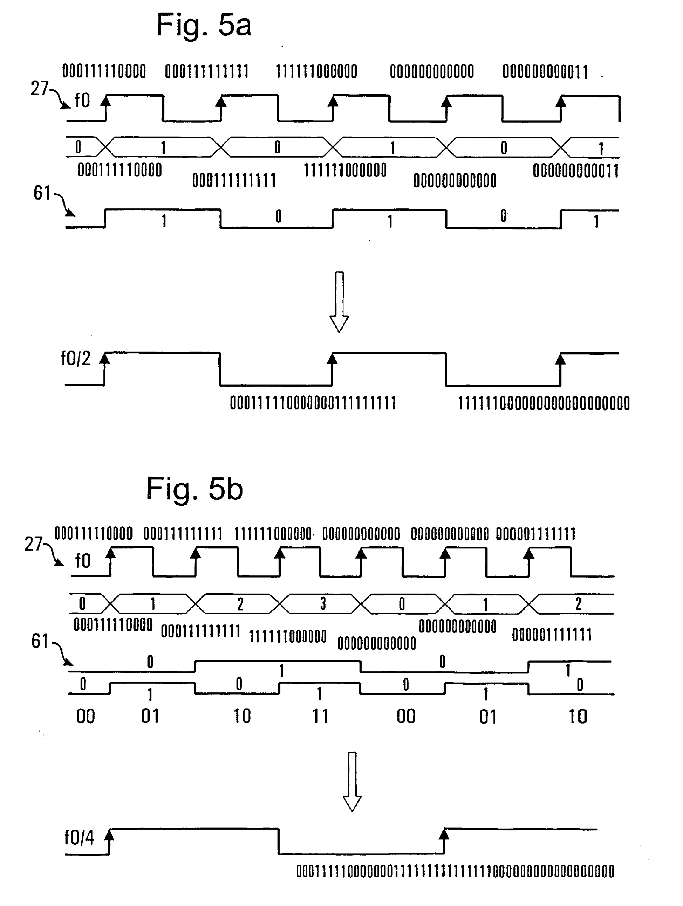

Durch eine geschickte Programmierung des FPGA, die in Fig. 5 insbesondere durch die benachbarte Spalten verbindenden Linien veranschaulicht ist, lässt sich dieses Problem lösen. Die besondere Vorgehensweise besteht darin, dass für die Abtastwerte der einzelnen Takte keine einheitliche, sondern eine individuelle, die jeweilige zeitliche Position berücksichtigende Übernahme erfolgt:
In dem dargestellten Ausführungsbeispiel wird jeder zu einem bestimmten Takt - mit Ausnahme des Grundtaktes - gehörende und innerhalb einer bestimmten Grundtakt-Periode gemessene Abtastwert während der nächsten Grundtakt-Periode mit dem um eine Phase früheren Takt übernommen. Beispielsweise wird der Clk240-Wert "E" nicht mit der nächsten Clk0-Flanke übernommen (bis zu dieser verbliebe nur eine Zeitspanne von 2 x T0/6 = 1,06ns), sondern mit der C1k180-Flanke in der nächsten Periode oder in Synchronisationsstufe 2, so dass die Übernahmezeit 5 x T0/6 = 2,66ns beträgt.

Diese Übernahmeregel hat zur Folge, dass während einer Periode zeitlich gestaffelt erhaltene Abtastwerte A, B, C, D, E und F nach fünf Perioden oder Synchronisationsstufen zeitlich "nebeneinander liegen", d.h. synchronisiert sind und gemeinsam als sechsstelliger Bitvektor mit dem Grundtakt weiterverarbeitet werden können. Die bei diesem Prinzip zur Verfügung stehende Übernahmezeit ist gegenüber der Periode T0 des Grundtaktes nur vergleichsweise geringfügig reduziert. Bei einer n-fachen Phasenverschiebung des Grundtaktes beträgt die Übernahmezeit (n-1)/n x T0. Es ist im Prinzip auch möglich, für die Übernahme jeweils nicht den um lediglich eine Phase früheren, sondern einen noch früheren Takt vorzusehen, um im Prinzip kann die Übernahme auch in einer späteren Periode anstatt in der unmittelbar auf die Messperiode folgenden Periode erfolgen.

### Reduzierung des Grundtaktes:

Für die weitere Verarbeitung von z.B. durch die vorstehend erläuterte Synchronisation erhaltenen Daten beispielsweise in Form der erwähnten Bitvektoren kann der insbesondere entsprechend der gewünschten Auflösung gewählte bzw. eingestellte Grundtakt C1k0 des verwendeten FPGA, d.h. sozusagen dessen momentane Arbeitsfrequenz f0, die beispielsweise 312,5 MHz beträgt, zu hoch sein (vgl. Fig. 5a und 5b).

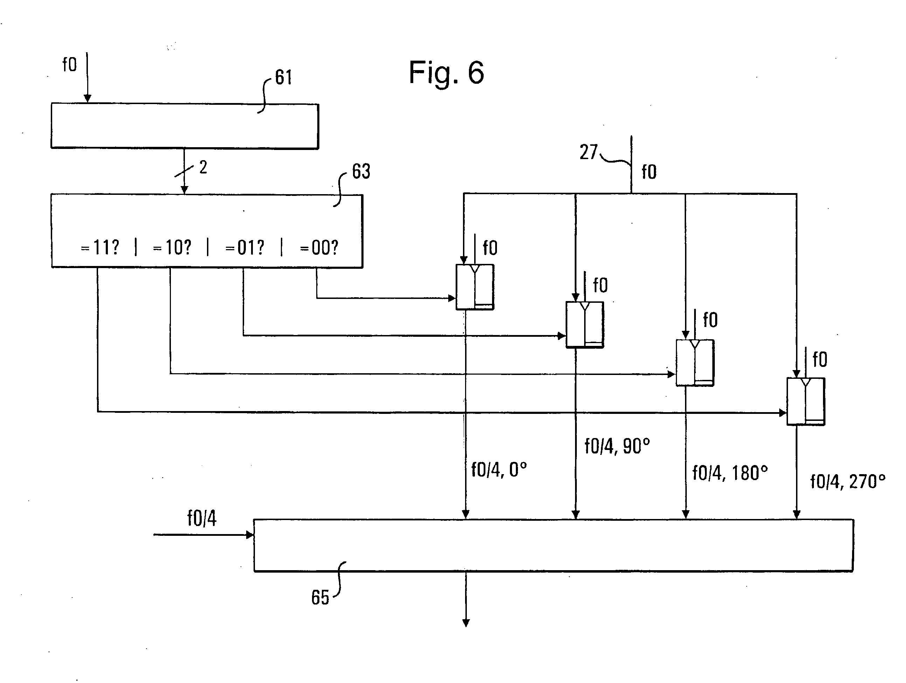

Um hier Abhilfe zu schaffen, wird erfindungsgemäß vorgeschlagen, zunächst die mit dem Grundtakt Clk0 anstehenden und sich daher mit f0 ändernden Bitvektoren des das Eingangssignal bildenden logischen Empfangssignals 27 in 2^m Datenströme (z.B. in Fig. 5a auf zwei (m=1) und in Fig. 5b auf vier (m=2) Datenströme) aufzuteilen, die sich daher nur noch mit f0/(2^m) ändern. Hierzu wird insbesondere (vgl. Fig. 6 für das Beispiel m=2) mittels einer Anordnung aus einem letztlich als Frequenzteiler wirkenden m-Bit-Zähler 61 und einem die betreffenden Register mit entsprechenden Clock-enable-Signalen ansteuernden Komparatorblock 63 der Eingangs-Datenstrom aufgeteilt, wodurch 2^m um 360° / (2^m) gegeneinander phasenverschobene Datenströme, d.h. Ströme von Bitvektoren, erzeugt werden.

Anschließend werden diese 2^m Datenströme wieder auf die steigende Flanke eines der sich nur mit fo/(2^m) ändernden Takte synchronisiert, wodurch sich ein einziger mit f0/(2^m) ändernder Strom von Bitvektoren ergibt, so dass die weitere Verarbeitung mit f0/(2^m) erfolgen kann.

Die Verarbeitung der Daten im FPGA wird hierdurch um einen Faktor 2^m verlangsamt und geht dafür - in Bezug auf die Register oder Logikeinheiten des FPGA gesehen - um eben diesen Faktor "in die Breite".

Die in Verbindung mit den Zählern 61 erforderlichen Vergleiche können insbesondere für m=1 und m=2 in einer Look-Up-Table (LUT) des FPGA durchgeführt werden, wodurch der hierfür erforderliche Zeitaufwand minimiert wird.

Dieser Reduzierung der Verarbeitungsgeschwindigkeit liegt folglich das allgemeine Prinzip einer Frequenzteilung zugrunde, bildlich gesprochen die Verteilung eines relativ schnellen Eingangsdatenstromes auf eine Mehrzahl von relativ langsamen Teildatenströmen, wobei insbesondere eine Einheit (z.B. Zähler 61) mit sich zyklisch im Takt des Eingangsdatenstromes ändernden Werten verwendet wird, die (z.B. mittels des Komparatorblocks 63) abgefragt werden können, um hierdurch die Verteilung oder Aufteilung der Daten auf die Teilströme geordnet steuern zu können.

### Bezugszeichenliste

- 11: Sender
- 13: ausgesandte Strahlung
- 15, 15': Objekt
- 17: reflektierter Signalpuls
- 19: Empfänger
- 21: analoges Empfangssignal, Rückstreukurve
- 23: Umwandlungseinrichtung, Schwellenschaltung
- 25: logischer Signalpuls
- 27: logisches Empfangssignal
- 31: Logikschaltung, FPGA
- 33: Auswerteeinheit
- 35: Filter
- 37: Triggersignal
- 39: Startpuls
- 41: Startpulssignal
- 43: Messblock
- 45: Datenleitung
- 47: Steuerblock
- 49: Schnittstelle
- 51: Taktgeber
- 53: Abdeckung
- 55: Takteinheit
- 57: Synchronisationseinheit
- 59: Verarbeitungseinheit

- 61: Zähler
- 63: Komparatorblock
- 65: Synchronisationsblock

- S: Schwelle

## Patentansprüche

1. Verfahren zur Entfernungsmessung durch Bestimmen der Pulslaufzeit, bei dem mit wenigstens einem Sender (11) gepulste elektromagnetische Strahlung (13) ausgesandt wird und an Objekten (15) reflektierte Signalpulse (17) mit wenigstens einem Empfänger (19) nachgewiesen werden, wobei aus dem die Signalpulse (17) enthaltenden analogen Empfangssignal (21), insbesondere mittels einer Schwellenschaltung (23), zumindest ein logische Signale (25) enthaltendes logisches Empfangssignal (27) erzeugt und hinsichtlich der Laufzeiten der logischen Signale (25) ausgewertet wird,
wobei das logische Empfangssignal (27) mittels einer getakteten Dateneinleseeinrichtung in eine programmierbare Logikschaltung (31) eingelesen und in der Logikschaltung (31) auf ein Zeitraster abgebildet wird, indem für wenigstens einem Takt der Dateneinleseeinrichtung entsprechende Zeitfenster des Zeitrasters Momentanwerte des logischen Empfangssignals (27) in den Zeitfenstern zugeordneten Logikeinheiten der Logikschaltung (31) festgehalten werden,
**dadurch gekennzeichnet,**
**dass** mehrere Takte durch Phasenverschiebung eines Grundtaktes erzeugt werden,
**dass** das logische Empfangssignal (27) phasenverschoben wird, und dass als Logikschaltung (31) wenigstens ein FPGA (Field Programmable Gate Array) verwendet wird,
wobei die Phasenverschiebung des Grundtaktes und die Phasenverschiebung des logischen Empfangssignals (27) extern bezüglich des FPGA erfolgen.

2. Verfahren nach einem der vorhergehenden Ansprüche,
**dadurch gekennzeichnet,**
**dass** als Dateneinleseeinrichtung wenigstens ein Seriell/Parallel-Wandler verwendet wird.

3. Verfahren nach einem der vorhergehenden Ansprüche,
**dadurch gekennzeichnet,**
**dass** als Dateneinleseeinrichtung wenigstens ein MGT (Multi-Gigabit-Transceiver) verwendet wird.

4. Verfahren nach einem der vorhergehenden Ansprüche,
**dadurch gekennzeichnet,**
**dass** die Momentanwerte in den Logikeinheiten festgehalten werden, bis das logische Empfangssignal (27) vollständig eingelesen ist.

5. Verfahren nach einem der vorhergehenden Ansprüche,
**dadurch gekennzeichnet,**
**dass** die Menge der Momentanwerte eines logischen Empfangssignals (27) als Messergebnis einer der Logikschaltung (31) nachgeordneten Auswerteeinheit (33) zugeführt werden.

6. Verfahren nach einem der vorhergehenden Ansprüche,
**dadurch gekennzeichnet,**
**dass** aus dem analogen Empfangssignal (21) mehrere logische Empfangssignale (27) erzeugt werden, indem das analoge Empfangssignal (21) gleichzeitig oder nacheinander über mehrere Schwellen (S) einer Schwellenschaltung (23) geführt wird.

7. Verfahren nach einem der vorhergehenden Ansprüche,
**dadurch gekennzeichnet,**
**dass** eine adaptive Schwelle (S) verwendet wird, deren Höhe sich zeitlich in Abhängigkeit von dem analogen Empfangssignal (21) ändert.

8. Verfahren nach Anspruch 7,
**dadurch gekennzeichnet,**
**dass** die adaptive Schwelle (S) durch Filterung des analogen Empfangssignals (21) erzeugt wird, insbesondere durch Tiefpassfilterung.

9. Verfahren nach einem der vorhergehenden Ansprüche,
**dadurch gekennzeichnet,**
**dass** ein Messergebnis aus mehreren der Logikschaltung (31) zugeführten logischen Empfangssignalen (27) gebildet wird.

10. Verfahren nach einem der vorhergehenden Ansprüche,
**dadurch gekennzeichnet,**
**dass** während der Messung zwischen den einzelnen logischen Empfangssignalen (27) umgeschaltet wird.

11. Verfahren nach einem der vorhergehenden Ansprüche,
**dadurch gekennzeichnet,**
**dass** in der Logikschaltung (31) mehrere logische Empfangssignale (27) gleichzeitig auf Zeitrastern abgebildet werden.

12. Verfahren nach einem der vorhergehenden Ansprüche,
**dadurch gekennzeichnet,**
**dass** während einer Periode (T0) eines Grundtaktes (Clk0) erhaltene Momentanwerte, die mit dem Grundtakt (Clk0) und einer Mehrzahl von Nebentakten (Clk60, Clk120, Clk180, Clk240, Clk300), welche aus dem Grundtakt (Clk0) insbesondere durch Phasenverschiebung erzeugt werden, zeitlich nacheinander erhalten werden, auf einen Takt, insbesondere auf den Grundtakt (Clk0), synchronisiert werden, indem jeder zu einem bestimmten Nebentakt (Clk60, Clk120, Clk180, Clk240 oder Clk300) gehörende und innerhalb einer bestimmten Grundtakt-Periode erhaltene Momentanwert während einer späteren Grundtakt-Periode mit einem früheren Takt übernommen wird.

13. Verfahren nach einem der vorhergehenden Ansprüche,
**dadurch gekennzeichnet,**
**dass** die Geschwindigkeit der Weiterverarbeitung von mit einem Grundtakt (Clk0) der Frequenz f0 erhaltenen Momentanwerten in der Logikschaltung (31) um einen Faktor 2^m reduziert wird, indem zunächst der sich mit f0 ändernde Strom von Momentanwerten, insbesondere mittels eines m-Bit-Zählers (61) auf 2^m sich mit f0/(2^m) ändernde und um 360°/(2^m) gegeneinander phasenverschobene Teilströme aufgeteilt wird und anschließend die Teilströme auf einen Takt der Frequenz f0/(2^m) synchronisiert werden.

14. Verfahren nach Anspruch 13,
**dadurch gekennzeichnet,**
**dass** die Synchronisation nach dem in Anspruch 15 angegebenen Synchronisationsprinzip erfolgt.

15. Verfahren nach einem der vorhergehenden Ansprüche,
**dadurch gekennzeichnet,**
**dass** das logische Empfangssignal (27) mittels einer programmierbaren Verzögerungsleitung der Logikschaltung (31) phasenverschoben wird.

16. Verwendung einer programmierbaren Korrekturfunktion einer wenigstens ein FPGA (Field Programmable Gate Array) umfassenden Logikschaltung (31), die zur zeitlichen Korrektur von Eingangssignalen in Bezug auf einen Grundtakt vorgesehen ist,
zur Erzeugung einer Mehrzahl von gegeneinander phasenverschobenen Signalen aus einem logischen Empfangssignal (27) in einem Verfahren nach einem der vorhergehenden Ansprüche.

17. Vorrichtung zur Entfernungsmessung durch Bestimmen der Pulslaufzeit, die zur Durchführung eines Verfahrens nach einem der Ansprüche 1 bis 15 ausgebildet ist, mit wenigstens einem Sender (11) zur Aussendung gepulster elektromagnetischer Strahlung (13) und zumindest einem Empfänger (19) zum Nachweis von an Objekten (15) reflektierten Signalpulsen (17), wobei dem Empfänger (19) eine Umwandlungseinrichtung (23), insbesondere eine Schwellenschaltung, nachgeordnet ist, mit der aus dem die Signalpulse (17) enthaltenden analogen Empfangssignal (21) zumindest ein logische Signale (25) enthaltendes logisches Empfangssignal (27) erzeugbar ist, wobei der Umwandlungseinrichtung (23) eine Messeinrichtung mit einer getakteten Dateneinleseeinrichtung und einer programmierbaren Logikschaltung (31) nachgeordnet ist,
wobei das mittels der Dateneinleseeinrichtung eingelesene logische Empfangssignal (27) auf eine Vielzahl von Logikeinheiten der Logikschaltung (31) abbildbar ist,
wobei für wenigstens einem Takt der Dateneinleseeinrichtung entsprechende Zeitfenster des Zeitrasters Momentanwerte des logischen Empfangssignals (27) in den Zeitfenstern zugeordneten Logikeinheiten der Logikschaltung (31) festhaltbar ist, und
wobei die Logikschaltung (31) wenigstens ein FPGA (Field Programmable Gate Array) umfasst.

18. Vorrichtung nach Anspruch 17,
**dadurch gekennzeichnet,**
**dass** die Dateneinleseeinrichtung wenigstens einen Seriell/Parallel-Wandler umfasst.

19. Vorrichtung nach Anspruch 17 oder 18,
**dadurch gekennzeichnet,**
**dass** die Dateneinleseeinrichtung wenigstens einen MGT (Multi-Gigabit-Transceiver) umfasst.

20. Vorrichtung nach einem der Ansprüche 17 bis 19,
**dadurch gekennzeichnet,**
**dass** eine Schwellenschaltung (23) zur Erzeugung einer adaptiven Schwelle (S) ausgebildet ist, deren Höhe sich zeitlich in Abhängigkeit von dem analogen Empfangssignal (21) ändert.

21. Vorrichtung nach Anspruch 20,
**dadurch gekennzeichnet,**
**dass** die Schwellenschaltung (23) zur Erzeugung der adaptiven Schwelle (S) einen Filter (35), insbesondere einen Tiefpassfilter, für das analoge Empfangssignal (21) umfasst.

## Claims

1. A method for distance measurement by determining the pulse transit time, in which pulsed electromagnetic radiation (13) is transmitted using at least one transmitter (11) and signal pulses (17) reflected at objects (15) are detected using at least one receiver (19), wherein at least one received logic signal (27) containing logic signals (25) is generated from the received analog signal (21) containing the signal pulses (17), in particular by means of a threshold circuit (23), and is evaluated with respect to the transit times of the logic signals (25),
wherein the received logic signal (27) is read into a programmable logic circuit (31) by means of a clocked data reading device and is mapped onto a time pattern in the logic circuit (31) in that instantaneous values of the received logic signal (27) are stored in logic units of the logic circuit (31) associated with the time windows for time windows of the time pattern corresponding to at least one clock of the data reading device,
**characterized in that**
a plurality of clocks are generated by phase shifting of a base clock; **in that** the received logic signal (27) is phase shifted; and
**in that** at least one FPGA (field programmable gate array) is used as the logic circuit (31),
wherein the phase shift of the base clock and the phase shift of the received logic signal (27) take place externally with respect to the FPGA.

2. A method in accordance with claim 1,
**characterized in that**
at least one serial/parallel converter is used as the data reading device.

3. A method in accordance with one of the preceding claims,
**characterized in that**
at least one MGT (multi-gigabit transceiver) is used as the data reading unit.

4. A method in accordance with any one of the preceding claims,
**characterized in that**
the instantaneous values are stored in the logic units until the received logic signal (27) has been completely read in.

5. A method in accordance with any one of the preceding claims,
**characterized in that**
the set of the instantaneous values of a received logic signal (27) is supplied to an evaluation unit (33) downstream of the logic circuit (31) as the measurement result.

6. A method in accordance with any one of the preceding claims,
**characterized in that**
a plurality of received logic signals (27) are generated from the received analog signal (21) **in that** the received analog signal (21) is directed simultaneously or successively via a plurality of thresholds (S) of a threshold circuit (23).

7. A method in accordance with any one of the preceding claims,
**characterized in that**
an adaptive threshold (S) is used whose level changes in time in dependence on the received analog signal (21).

8. A method in accordance with claim 7,
**characterized in that**
the adaptive threshold (S) is generated by filtering the received analog signal (21), in particular by low-pass filtering.

9. A method in accordance with any one of the preceding claims,
**characterized in that**
a measurement result is formed from a plurality of received logic signals (27) supplied to the logic circuit (31).

10. A method in accordance with any one of the preceding claims,
**characterized in that**
switching takes place between the individual received logic signals (27) during the measurement.

11. A method in accordance with any one of the preceding claims,
**characterized in that**
a plurality of received logic signals (27) are simultaneously mapped on time patterns in the logic circuit (31).

12. A method in accordance with any one of the preceding claims,
**characterized in that**
instantaneous values which are obtained during a period (T0) of a base clock (Clk0), which are obtained sequentially in time with the base clock (Clk0) and a plurality of secondary clocks (Clk60, Clk120, Clk180, Clk240, Calk300), which are in particular generated from the base clock (Clk0) by phase shift, are synchronized to a clock, in particular to the base clock (Clk0), **in that** each instantaneous value belonging to a specific secondary clock (Clk60, Clk120, Clk180, Clk240 or Clk300) and obtained within a specific base clock period is taken over with an earlier clock during a later base clock period.

13. A method in accordance with any one of the preceding claims,
**characterized in that**
the speed of the further processing of instantaneous values obtained with a base clock (Clk0) of the frequency f0 is reduced by a factor of 2^min the logic circuit (31) **in that** first the stream of instantaneous values changing with f0 is divided, in particular by means of an m-Bit counter (61), into 2^m part streams changing with f0/(2^m) and shifted in phase by 360°/(2^m) with respect to one another and **in that** the part streams are subsequently synchronized to a clock of the frequency f0/(2^m).

14. A method in accordance with claim 13,
**characterized in that**
the synchronization takes place in accordance with the synchronization principle indicated in claim 13.

15. A method in accordance with any one of the preceding claims,
**characterized in that**
the received logic signal (27) is phase-shifted by means of a programmable delay line of the logic circuit (31).

16. Use of a programmable correction function of a logic circuit (31) comprising at least one FPGA, which is provided for the time correction of input signals with respect to a base clock,
for the generation of a plurality of signals from a received logic signal (27) which are phase-shifted with respect to one another in a method in accordance with any one of the preceding claims.

17. An apparatus for distance measurement by determining the pulse transit time which is configured for carrying out a method in accordance with any one of the claims 1 to 15, comprising at least one transmitter (11) for the transmission of pulsed electromagnetic radiation (13) and at least one receiver (19) for the detection of signal pulses (17) reflected at objects (15), wherein a conversion device (23), in particular a threshold circuit, is positioned downstream of the receiver (19) with which threshold circuit at least one received logic signal (27) containing logic signals (25) can be generated from the received analog signal (21) containing the signal pulses (17),
wherein a measurement device having a clocked data reading device and a programmable logic circuit (31) is positioned downstream of the conversion device (23),
wherein the received logic signal (27) read in by means of the data reading device can be mapped onto a plurality of logic units of the logic circuit (31),
wherein instantaneous values of the received logic signal (27) can be stored in the logic units of the logic circuit (31) associated with the time windows for time windows of the time pattern corresponding to at least one clock of the data reading device; and
wherein the logic circuit (31) comprises at least one FPGA (field programmable gate array).

18. An apparatus in accordance with claim 17,
**characterized in that**
the data reading device comprises at least one serial/parallel converter.

19. An apparatus in accordance with claim 17 or claim 18,
**characterized in that**
the data reading device comprises at least one MGT (multi-gigabit transceiver).

20. An apparatus in accordance with any one of the claims 17 to 19,
**characterized in that**
a threshold circuit (23) is adapted to generate an adaptive threshold (S) whose level changes in time in dependence on the received analog signal (21).

21. An apparatus in accordance with claim 20,
**characterized in that**
the threshold circuit (23) for the generation of the adaptive threshold (S) comprises a filter (35), in particular a low-pass filter, for the received analog signal (21).

## Revendications

1. Procédé pour la mesure de distance par détermination du temps de parcours d'impulsions, dans lequel on émet avec au moins un émetteur (11) un rayonnement électromagnétique pulsé (13) et des impulsions de signaux (17) réfléchis sur des objets (15) sont mises en évidence avec au moins un récepteur (19), dans lequel on engendre, à partir du signal reçu analogique (21) qui contient les impulsions de signaux (17), en particulier au moyen d'un circuit à seuil (23), au moins un signal reçu logique (27) qui contient des signaux logiques (25) et on évalue celui-ci à l'égard des temps de parcours des signaux logiques (25),
dans lequel le signal reçu logique (27) est lu au moyen d'un système de lecture de données cadencé, dans un circuit logique programmable (31) et on en produit l'image dans le circuit logique (31) sur une trame temporelle, en ce que pour des fenêtres temporelles, de la trame temporelle, correspondant à au moins une cadence du système de lecture de données on retient des valeurs momentanées du signal reçu logique (27) dans des unités logiques, du circuit logique (31), associées aux fenêtres temporelles,
**caractérisé en ce que**
on engendre plusieurs cadences par décalage de phase d'une cadence de base,
**en ce que** le signal reçu logique (27) est décalé en phase et on utilise à titre de circuit logique (31) au moins un composant FPGA ("Field Programmable Gate Array"),
dans lequel le décalage de phase de la cadence de base et le décalage de phase du signal reçu logique (27) ont lieu de façon externe vis-à-vis du FPGA.

2. Procédé selon l'une des revendications précédentes,
**caractérisé en ce que** l'on utilise à titre de système de lecture de données au moins un convertisseur série/parallèle.

3. Procédé selon l'une des revendications précédentes,
**caractérisé en ce que** l'on utilise à titre de système de lecture de données au moins un MGT ("Multi-Gigabit-Transceiver").

4. Procédé selon l'une des revendications précédentes,
**caractérisé en ce que** des valeurs momentanées sont retenues dans les unités logiques jusqu'à ce que le signal reçu logique (27) ait été entièrement lu.

5. Procédé selon l'une des revendications précédentes,
**caractérisé en ce que** le groupe des valeurs momentanées d'un signal reçu logique (27) sont injectées à titre de résultat de mesure dans une unité d'évaluation (33) disposée à la suite du circuit logique (31).

6. Procédé selon l'une des revendications précédentes,
**caractérisé en ce que** l'on engendre à partir du signal reçu analogique (21) plusieurs signaux reçus logiques (27) en admettant le signal reçu analogique (21) simultanément ou en succession à un circuit à seuil (23) via plusieurs seuils (S).

7. Procédé selon l'une des revendications précédentes,
**caractérisé en ce que** l'on utilise un seuil adaptatif (S), dont la hauteur varie temporellement en fonction du signal reçu analogique (21).

8. Procédé selon la revendication 7,
**caractérisé en ce que** le seuil adaptatif (S) est engendré par filtrage du signal reçu analogique (21), en particulier par filtrage passe-bas.

9. Procédé selon l'une des revendications précédentes,
**caractérisé en ce que** l'on forme un résultat de mesure à partir de plusieurs signaux reçus logiques (27) injectés dans le circuit logique (31).

10. Procédé selon l'une des revendications précédentes,
**caractérisé en ce que** l'on commute pendant la mesure entre les signaux reçus logiques (27) individuels.

11. Procédé selon l'une des revendications précédentes,
**caractérisé en ce que** l'on forme dans le circuit logique (31) l'image de plusieurs signaux reçus logiques (27) simultanément sur des trames temporelles.

12. Procédé selon l'une des revendications précédentes,
**caractérisé en ce que** des valeurs momentanées obtenues pendant une période (T0) d'une cadence de base, qui sont obtenues temporellement les unes après les autres avec la cadence de base (Clk0) et avec une pluralité de cadences annexes (Clk60, Clk120, Clk180, Clk240, Clk300), qui ont été engendrées à partir de la cadence de base (Clk0) en particulier par décalage de phase, sont synchronisées sur une cadence, en particulier sur la cadence de base (Clk0) en reprenant chaque valeur momentanée appartenant à une cadence annexe déterminée (Clk60, Clk120, Clk180, Clk240 ou Clk300) et obtenue à l'intérieur d'une période déterminée de la cadence de base, pendant une période postérieure de la cadence de base avec une cadence antérieure.

13. Procédé selon l'une des revendications précédentes,
**caractérisé en ce que** la vitesse de la poursuite du traitement de valeurs momentanées obtenues avec une cadence de base (Clk0) à la fréquence f0 est réduite d'un facteur 2^m dans le circuit logique (31), en subdivisant tout d'abord le flux, qui varie avec f0, de valeurs momentanées, en particulier au moyen d'un compteur à m-bits (61) en 2^m flux partiels qui varient avec f0/(2^m) et sont décalés en phase de 360°/(2^m) les uns par rapport aux autres, et les flux partiels sont ensuite synchronisés à une cadence avec la fréquence f0/(2^m).

14. Procédé selon la revendication 13,
**caractérisé en ce que** la synchronisation a lieu avec le principe de synchronisation indiqué dans la revendication 15.

15. Procédé selon l'une des revendications précédentes,
**caractérisé en ce que** le signal reçu logique (27) est décalé en phase au moyen d'une ligne retard programmable du circuit logique (31).

16. Utilisation d'une fonction de correction programmable d'un circuit logique (31) incluant au moins un composant FPGA ("Field Programmable Gate Array"), qui est prévu pour la correction temporelle de signaux reçus par référence à une cadence de base,
pour engendrer une pluralité de signaux décalés en phase les uns par rapport aux autres à partir d'un signal reçu logique (27) dans un procédé selon l'une des revendications précédentes.

17. Dispositif pour la mesure de distance par détermination du temps de parcours d'impulsions, qui est réalisé pour mettre en oeuvre un procédé selon l'une des revendications 1 à 15, comprenant au moins un émetteur (11) pour émettre un rayonnement électromagnétique pulsé (13) et au moins un récepteur (19) pour la mise en évidence d'impulsions de signaux (17) réfléchis sur des objets (15), dans lequel un système de conversion (23) est disposé à la suite du récepteur (19), en particulier un circuit à seuil, au moyen duquel au moins un signal reçu logique (27) qui contient des signaux logiques (25) est susceptible d'être engendré à partir du signal reçu analogique (21) qui contient les impulsions de signaux (17), dans lequel un dispositif de mesure comprenant un système de lecture de données cadencées et un circuit logique programmable (31) est disposé à la suite du système de conversion (23),
dans lequel le signal reçu logique (27) lu au moyen du système de lecture de données est susceptible d'être formé en images sur une pluralité d'unités logiques du circuit logique (31),
dans lequel, pour des fenêtres temporelles, de la trame temporelle, correspondant à au moins une cadence du système de lecture de données, des valeurs momentanées du signal reçu logique (27) sont susceptibles d'être retenues dans des unités logiques, du circuit logique (31), associées aux fenêtres temporelles, et
dans lequel le circuit logique (31) inclut au moins un FPGA ("Field Programmable Gate Array").

18. Dispositif selon la revendication 17,
**caractérisé en ce que** le système de lecture de données inclut au moins un convertisseur série/parallèle.

19. Dispositif selon la revendication 17 ou 18,
**caractérisé en ce que** le système de lecture de données inclut au moins un MGT ("Multi-Gigabit-Transceiver").

20. Dispositif selon l'une des revendications 17 à 19,
**caractérisé en ce qu'**un circuit à seuil (23) est réalisé pour engendrer un seuil adaptatif (S), dont la hauteur varie temporellement en fonction du signal reçu analogique (21).

21. Dispositif selon la revendication 20,
**caractérisé en ce que** le circuit à seuil (23) pour engendrer le seuil adaptatif (S) comprend un filtre (35), en particulier un filtre passe-bas, pour le signal reçu analogique (21).
